(19) **Europäisches Patentamt / European Patent Office / Office européen des brevets**

(11) **EP 4 617 144 A1**

(12) **EUROPEAN PATENT APPLICATION**
published in accordance with Art. 153(4) EPC

(43) Date of publication:
**17.09.2025 Bulletin 2025/38**

(21) Application number: **23887169.3**

(22) Date of filing: **17.10.2023**

(51) International Patent Classification (IPC):
**B61L 23/14** (2006.01)　　**B60L 15/40** (2006.01)
**B61L 29/28** (2006.01)

(52) Cooperative Patent Classification (CPC):
**B60L 15/40; B61L 23/14; B61L 29/28**

(86) International application number:
**PCT/JP2023/037511**

(87) International publication number:
**WO 2024/101087 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 JP 2022181082**

(71) Applicant: **Hitachi, Ltd.
Tokyo 100-8280 (JP)**

(72) Inventors:
• **MAEKAWA, Keiji
Tokyo 100-8280 (JP)**
• **NIITSUMA, Kensaku
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **TRAIN CONTROL SYSTEM**

(57) An object of the present invention is to provide a train control system that determines an acceleration start time and performs speed control such that a train can pass through a level crossing at an allowable maximum speed.

One train control system of the invention is a train control system that controls a train traveling on a track having a level crossing, the train control system including: an operation communication unit configured to receive information on a scheduled alarm activation time that is a scheduled time at which an alarm of the level crossing is to start; and a planning unit configured to calculate, based on the scheduled alarm activation time, a scheduled passing time of the level crossing scheduled to be passed. The planning unit determines an acceleration start time that is a time at which the train starts to accelerate when a current speed and a current position of the train, a remaining time that is a difference between a current time and the scheduled passing time, and a remaining distance that is a distance between the current position and the level crossing scheduled to be passed satisfy a predetermined relationship, and instructs the train to decelerate when the predetermined relationship is not satisfied.

FIG. 3

CURRENT TIME T0

**Description**

Technical Field

The present invention relates to a train control system.

Background Art

In the field of railway level crossing control, there is a control method based on a position of a train. That is, regardless of a speed of the train, a level crossing alarm is started when the train passes a predetermined position. Meanwhile, there is a control method of ensuring a safety-required level crossing alarm duration in consideration of a speed of a train and vehicle performance.

For example, PTL 1 discloses a train control system that determines a level crossing passing time in consideration of a given scheduled level crossing alarm start time and a required alarm duration, and performs speed control such that a train can pass through a level crossing at the level crossing passing time without unnecessarily decelerating. Here, the scheduled alarm start time at which an alarm of the level crossing is started is received, and a time obtained by adding the required alarm duration to the scheduled alarm start time is calculated as the level crossing passing time. An upper limit speed Va at which the train can pass through the level crossing at the calculated passing time is calculated, and a speed of the train is controlled according to the calculated upper limit speed Va.

PTL 2 discloses a train control system that can allow a train to pass through a level crossing at a high speed while ensuring, when a required alarm duration is insufficient, the alarm duration by decelerating at an early timing. Here, an acceleration pattern that reaches the level crossing at a planned speed Vm assumed as a speed at which the train passes through the level crossing is created, and a time Ta(vi) until the train reaches the level crossing by accelerating from each speed Vi on the acceleration pattern and a distance L1(vi) to the level crossing are calculated for each speed. While a condition that a remaining alarm duration required for a current speed V of the train $\leq$ Ta(v) is satisfied, the speed of the train is controlled to reach the acceleration pattern at the speed V, and the train passes through the level crossing at the planned speed Vm by accelerating according to the acceleration pattern after reaching the acceleration pattern.

Citation List

Patent Literature

PTL 1: JP2020-196369A
PTL 2: JP7045287B

Summary of Invention

Technical Problem

In a case where passing through a level crossing is controlled only based on a position of a train, for example, when a delay occurs due to an accident, there is a problem that a speed of the train is lower than expected, a time until the train reaches the level crossing is longer than expected, and a level crossing alarm duration becomes long.

When an upper limit speed until the train reaches the level crossing is calculated in consideration of the speed of the train and train performance, since the train travels according to the calculated upper limit speed and thus the train reaches the level crossing at a level crossing passing time, it is possible to ensure a required alarm duration from when an alarm is started. However, the method disclosed in PTL 1 has the following problem: since the calculated upper limit speed is lower than an allowable maximum speed, it takes a long time for the train to pass through the level crossing as a result, and the level crossing alarm duration is prolonged. Further, in the method disclosed in PTL 1, there is a problem that processing with high computational load is required, such as solving a quadratic equation or approximating by iterative calculations in order to calculate the upper limit speed.

Meanwhile, as a method for maximizing the speed of entering the level crossing, there is a method disclosed in PTL 2. The method disclosed in PTL 2 only anticipates accelerating immediately before entering the level crossing, and thus even in a case where the required alarm duration can be ensured by accelerating in advance earlier, such acceleration control is not performed. Therefore, there is a problem that a delay in the level crossing alarm duration may be caused.

Therefore, an object of the invention is to provide a train control system that determines an acceleration start time and performs speed control such that a train can pass through a level crossing at an allowable maximum speed.

Solution to Problem

In order to solve the above problems, one train control system of the invention is a train control system that controls a train traveling on a track having a level crossing, the train control system including: an operation communication unit configured to receive information on a scheduled alarm activation time that is a scheduled time at which an alarm of the level crossing is to start; and a planning unit configured to calculate, based on the scheduled alarm activation time, a scheduled passing time of the level crossing scheduled to be passed, in which the planning unit determines an acceleration start time that is a time at which the train starts to accelerate when a current speed and a current position of the train, a remaining time that is a difference between a current time and the scheduled passing time, and a remaining distance that is a distance between the current position and the level crossing scheduled to be passed satisfy a predetermined relationship, and instructs the train to decelerate when the predetermined relationship is not satisfied.

Advantageous Effects of Invention

According to the invention, it is possible to determine an acceleration start time and perform speed control such that a train can pass through a level crossing at an allowable maximum speed.
Problems, configurations, and effects other than those described above will be made clear by the following description of an embodiment for carrying out the invention.

Brief Description of Drawings

    [FIG. 1] FIG. 1 is a diagram showing a configuration of a train control system.
    [FIG. 2] FIG. 2 is a diagram showing an acceleration control table containing information on acceleration control and a level crossing information table containing information on a level crossing, which are retained in a storage unit.
    [FIG. 3] FIG. 3 is a diagram showing an example of a speed of a train accelerated using a train control system according to a first embodiment of the invention.
    [FIG. 4] FIG. 4 is a diagram showing a boundary state when (Formula 2) is satisfied.
    [FIG. 5] FIG. 5 is a diagram showing a case where an acceleration distance cannot be ensured between a current position and the level crossing.
    [FIG. 6] FIG. 6 is a flowchart showing processing of acceleration and deceleration control performed by an acceleration and deceleration control apparatus.
    [FIG. 7] FIG. 7 is a diagram showing an example of a speed of a train accelerated using a train control system according to a second embodiment of the invention.

Description of Embodiments

Hereinafter, embodiments of the invention will be described with reference to the drawings.
The term "scheduled alarm activation time" means a scheduled time at which a level crossing alarm starts.
The term "track" refers to a pathway through which a train passes, and includes a railway and a track.
The term "alarm duration" is a time from when an alarm starts until when a train or the like arrives at a level crossing. The time is set for each level crossing based on conditions such as a size of the level crossing.

[First Embodiment]

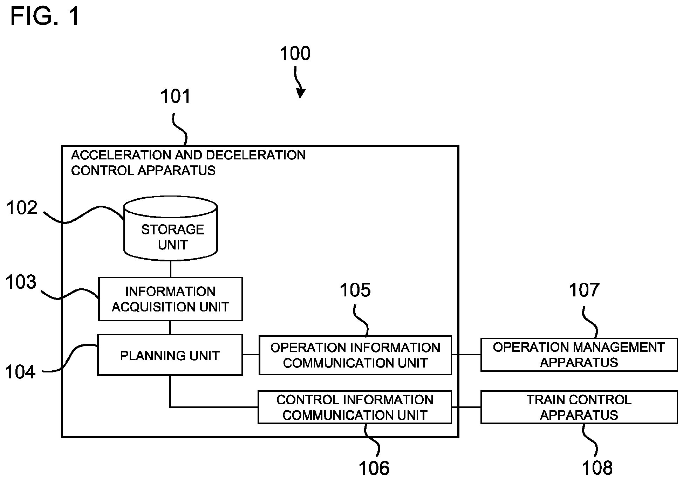

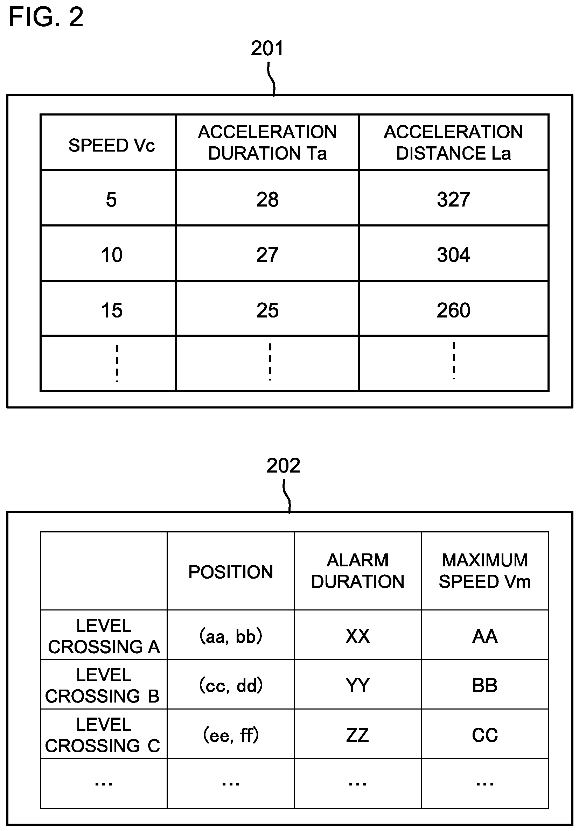

A configuration of a train control system according to a first embodiment of the invention will be described with reference to FIGS. 1 and 2. FIG. 1 is a diagram showing a configuration of a train control system 100. FIG. 2 is a diagram showing an acceleration control table 201 containing information on acceleration control and a level crossing information table 202 containing information on a level crossing, which are retained in a storage unit.

(System Configuration)

As shown in FIG. 1, the train control system 100 includes an acceleration and deceleration control apparatus 101, an operation management apparatus 107, and a train control apparatus 108. The train control system 100 controls a train traveling on a track having a level crossing. For example, the acceleration and deceleration control apparatus 101 and the train control apparatus 108 are provided on the train, and the operation management apparatus 107 is provided outside the train. The operation management apparatus 107 manages an operation status of the train in a managed section. The operation management apparatus 107 transmits information on an operation of the train to the acceleration and deceleration control apparatus 101, and in the first embodiment, particularly, information on a scheduled alarm activation time, which is a scheduled time at which a level crossing alarm starts, is transmitted. The scheduled alarm activation time can be, for example, a time at which the train passes a level crossing controller when traveling according to a running curve. The acceleration and deceleration control apparatus 101 is an apparatus that performs acceleration control for the train. The train control apparatus 108 controls an operation such as acceleration and deceleration of the train based on an output signal from the acceleration and deceleration control apparatus 101.

The acceleration and deceleration control apparatus 101 includes a storage unit 102, an information acquisition unit 103, a planning unit 104, an operation information communication unit 105, and a control information communication unit 106. The operation information communication unit 105 receives information on operation management including the scheduled alarm activation time transmitted from the operation management apparatus 107. The operation information communication unit 105 transmits information on the scheduled alarm activation time to the planning unit 104. The storage unit 102 stores a level crossing information table related to the level crossing, including a position of the level crossing on the track of the train, an alarm duration set for each level crossing, and a maximum speed Vm allowed at the level crossing. The storage unit 102 also retains an acceleration control table of an acceleration duration Ta and an acceleration distance La required to accelerate from a current speed, which is a speed at a current time point, to a level crossing passing speed for passing through the level crossing scheduled to be passed. The information acquisition unit 103 extracts required information from the storage unit 102 in response to a request from the planning unit 104. The planning unit 104 calculates a time and a distance required to reach the level crossing passing speed.

FIG. 2 is a diagram showing the acceleration control table 201 containing the information on acceleration control and the level crossing information table 202 containing the information on the level crossing, which are retained in the storage unit 102. The acceleration control table 201 contains information indicating a relationship among a current speed Vc, the acceleration duration Ta, and the acceleration distance La. For example, a train whose current speed is Vc reaches a predetermined speed when the train is accelerated according to the acceleration duration Ta and the acceleration distance La indicated by the acceleration control table 201. The acceleration duration Ta and the acceleration distance La are calculated using an acceleration of the train. Although Vc is indicated in increments of 5 herein, a step interval of Vc may be determined by accuracy of Ta and La required for calculating Tc. When it is desired to increase accuracy of Tc in order to calculate a time until reaching the level crossing with high accuracy, the step interval of Vc may be finer, and when there is no problem with rough acceleration accuracy, the step interval of Vc may be coarser. When the current speed Vc is within the step interval, a higher step speed value than the current speed may be used, or interpolation may be performed using a method such as linear interpolation. When an influence of a gradient on the acceleration is considered, Ta and La may be calculated by assuming a steepest descending gradient among gradients before the level crossing.

In the first embodiment, the predetermined speed is the level crossing passing speed and is the maximum speed Vm that is allowed when passing through the level crossing. Although only one acceleration control table 201 is shown here, a table may be provided for each maximum speed Vm. It is also possible to provide a table for each condition based on conditions of the track such as a curvature and a gradient in a traveling section. In addition, contents in the table may be updated according to the maximum speed Vm for the level crossing scheduled to be passed and the operation status of the train.

The level crossing information table 202 includes information indicating the position of the level crossing on the track, the alarm duration, and the maximum speed Vm. The position of the level crossing on the track can be specified by, for example, kilometrage of a corresponding route, and the first embodiment is not limited thereto. In a certain section from a departure station to an arrival station, it is also possible to specify by a traveling distance from the departure station to the level crossing. The alarm duration relates to the target level crossing and is a time from when the alarm starts to when the train arrives at the level crossing. This duration is set according to a shape of the level crossing and is 35 seconds in one example. It can also be said that the maximum speed Vm is an upper limit value of a speed allowed at a target level crossing when the train passes.

The acceleration control table 201 and the level crossing information table 202 are examples and are not limited thereto. Information other than those shown here may be contained. The storage unit 102 can retain other information in addition to the acceleration control table 201 and the level crossing information table 202.

(System Operation)

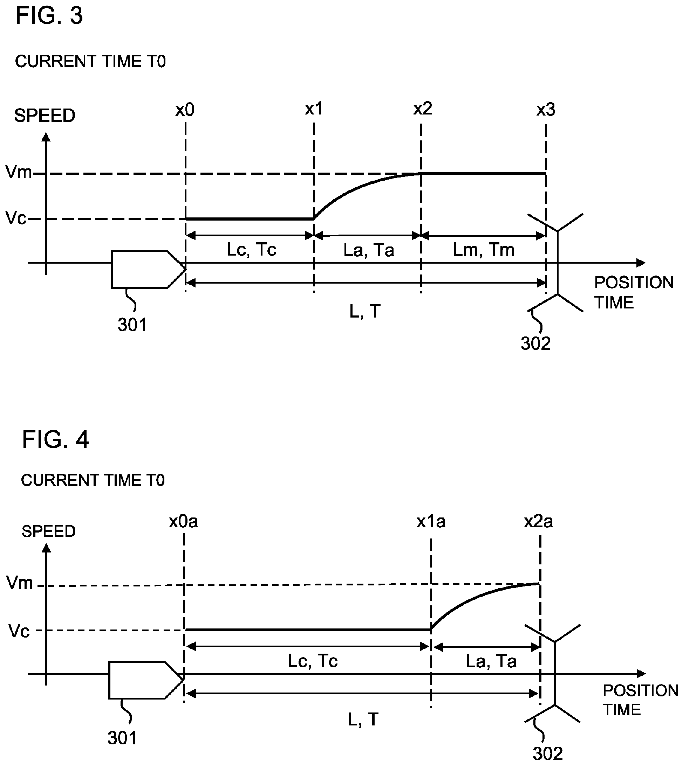

FIG. 3 is a diagram showing an example of the speed of the train accelerated using the train control system according to the first embodiment of the invention. In FIG. 3, a vertical axis represents a speed of a train 301, and a horizontal axis represents a position or a time relative to a level crossing 302. Here, a state of a change in the speed of the train 301 from a current position x0 to a position x3 of the level crossing 302 in a case where the train 301 is at the current position x0 and a current time T0 and the train control system is used is shown. As shown in FIG. 3, the train 301 performs constant-speed movement for a distance Lc and a time Tc while maintaining the current speed Vc, then accelerates for the distance La and the time Ta, reaches the maximum speed Vm at which the train 301 can pass through the level crossing 302, and travels for a distance Lm and a time Tm (Lc is also referred to as a constant-speed movement distance, and Tc is also referred to as a constant-speed movement duration). In other words, when the current speed Vc of the train 301, the current position x0, a remaining time that is a difference between the current time To and the scheduled passing time to be described later, and a remaining distance that is a distance between the current position x0 and the level crossing scheduled to be passed satisfy a predetermined relationship, the planning unit 104 determines an acceleration start time that is a time at which the train 301 starts to accelerate, and when the predetermined relationship is not satisfied, the planning unit 104 instructs the train 301 to decelerate. More specifically, the planning unit 104 calculates the acceleration start time on condition that the train 301 travels at the current speed Vc until the acceleration start time, accelerates from the acceleration start time until reaching the level crossing passing speed, and enters the level crossing at the level crossing passing speed as will be described later. Derivation of such a speed change will be described.

The planning unit 104 acquires the position of the level crossing through which the train 301 is scheduled to pass and a warning duration of the level crossing. Here, for example, the current position x0 of the train 301 is acquired, and the position of the level crossing scheduled to be passed can be extracted based on the current position and the level crossing information table 202 in the storage unit 102. The current position of the train 301 can be acquired using a method using a track circuit, or a normal technique such as an axle counter or a GPS.

The planning unit 104 adds the alarm duration to the scheduled alarm activation time to calculate the scheduled passing time that is a time at which the level crossing is started to be passed. The planning unit 104 calculates a difference between the scheduled passing time and the current time T0 as the remaining time T to the level crossing. Further, a difference between the position of the level crossing and the current position of the train 301 is calculated as a remaining distance L to the level crossing.

The planning unit 104 refers to the acceleration control table 201 via the information acquisition unit 103 and extracts the acceleration distance La and the acceleration duration Ta corresponding to the current speed Vc. Here, when it is assumed that the train performs constant-speed movement except for an acceleration period, the following relationship (Formula 1) is satisfied.
[Math. 1]

$$Vc \times Tc + La + Vm(T - Tc - Ta) = L \cdots \ (\text{Formula 1})$$

The following (Formula 2) is derived by rearranging (Formula 1).
[Math. 2]

$$Tc = \frac{Vm(T-Ta)+La-L}{Vm-Vc} \cdots \ (\text{Formula 2})$$

The planning unit 104 can calculate the constant-speed movement duration Tc by (Formula 2). Here, the constant-speed movement duration Tc is a time during which the constant-speed movement is continued at the current speed Vc, and is also a time required until accelerating is started from the current time T0. The planning unit 104 calculates a time obtained by adding the constant-speed movement duration Tc to the current time T0 as the acceleration start time. By starting accelerating the train 301 at the acceleration start time, traveling according to a speed curve shown in FIG. 1 can be implemented.

The planning unit 104 transmits information on the acceleration start time, the acceleration duration Ta, and the acceleration distance La thus calculated to the train control apparatus 108 via the control information communication unit 106. When the acceleration start time has elapsed, the train control apparatus 108 starts acceleration control based on the acceleration distance La and the acceleration duration Ta. When the speed of the train 301 reaches the maximum speed Vm, the train control apparatus 108 performs constant-speed movement at the maximum speed Vm. The train 301 enters the level crossing 302 at the maximum speed Vm.

(Condition for Speed Change)

Next, a condition for satisfying (Formula 2) is derived. (Formula 2) is not always satisfied for any train position, train speed Vc, remaining distance L, and remaining time T. For example, a case where the remaining time T is long and the train 301 enters the level crossing 302 before the remaining time T elapses when performing constant-speed movement at the current speed Vc is assumed. Even when the constant-speed movement duration Tc is calculated using (Formula 2) under such conditions, the speed curve shown in FIG. 1 is not obtained.

(Formula 2) is a formula satisfied on premises that it is possible to accelerate to the maximum speed Vm before reaching the level crossing 302. Here, FIG. 4 is a diagram showing a boundary state when (Formula 2) is satisfied. Here, a state of a change in the speed of the train 301 to a position x2a of the level crossing 302 in a case where the train 301 is at a current position x0a and the current time T0 and the train control system is used is shown. The train 301 accelerates from a position x1a and reaches the maximum speed Vm at the position x2a of the level crossing 302. FIG. 4 shows a case where the level crossing 302 is reached after the acceleration distance La, that is, a case where Lc + La = L. On the other hand, when Lc + La > L, the acceleration distance La required to reach the level crossing 302 cannot be ensured. Therefore, a condition for satisfying (Formula 2) is Lc + La < L. Here, Lc = Vc × Tc, and the following (Formula 3) can be derived using a relationship of Tc = T - Ta shown in FIG. 4.

[Math. 3]

$$Vc(T - Ta) + La < L \cdots \quad (\text{Formula 3})$$

When referring to the acceleration control table 201, the planning unit 104 checks whether the condition for (Formula 2) is satisfied, and calculates the constant-speed movement duration Tc using (Formula 3) if the condition is satisfied. When the condition is not satisfied, the planning unit 104 determines that the current speed Vc is high, and instructs the train control apparatus 108 to decelerate the train via the control information communication unit 106. At this time, a predetermined deceleration can be used. After the train decelerates, it is checked whether (Formula 3) is satisfied in a next calculation cycle. That is, the planning unit 104 instructs the train to decelerate until (Formula 3) is satisfied.

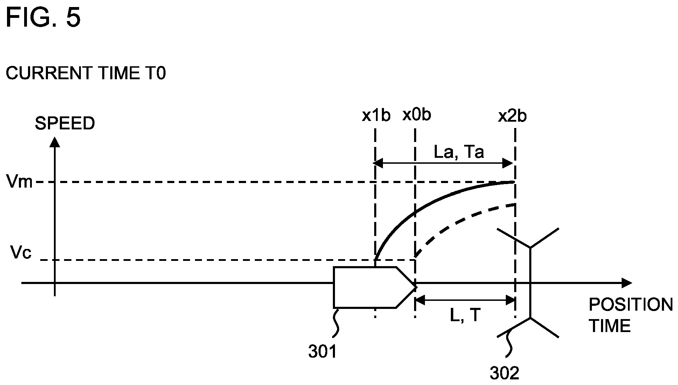

Further, another case where (Formula 2) is not satisfied is shown. FIG. 5 is a diagram showing a case where the acceleration distance La cannot be ensured between the current position x0 and the level crossing 302. Here, a state of a change in the speed of the train 301 to a position x2b of the level crossing 302 in a case where the train 301 is at a current position x0b and the current time T0 and the train control system is used is shown. The maximum speed Vm cannot be reached at the position x2b of the level crossing 302 unless the train 301 starts to accelerate from a position x1b that is a position farther from the level crossing 302 than the position x0b. As shown in FIG. 5, even when accelerating is started from the current position x0b, (Formula 2) is not satisfied when the maximum speed Vm cannot be reached before the position of the level crossing 302. Whether the state in FIG. 5 exists can be determined by comparing L with La corresponding to the current speed Vc in the acceleration control table 201, and when L < La, it can be determined that the state in FIG. 5 exists and (Formula 2) is not satisfied.

Also in FIG. 5, the planning unit 104 can perform acceleration control corresponding to the current speed Vc, and it is desirable that the train 301 accelerates as much as possible in order to pass through the level crossing 302 as quickly as possible. In this case, the planning unit 104 refers to a speed at which the acceleration distance La on the acceleration control table 201 is equal to or greater than the remaining distance L, and sets the acceleration duration Ta on the acceleration control table 201 at that time as a candidate acceleration duration Ta1. For example, when L = 300 in the acceleration control table 201 in FIG. **2,** the candidate acceleration duration Ta1 = 27 seconds. When the candidate acceleration duration Ta1 ≤ the remaining time T, the planning unit 104 determines that it is possible to accelerate since there is a time required for accelerating, and instructs the train control apparatus 108 to accelerate the train via the control information communication unit 106. When Ta1 > T, the planning unit 104 instructs the train control apparatus 108 to decelerate via the control information communication unit 106.

The processing of the acceleration and deceleration control apparatus 101 described above is premised on a delay of information on the scheduled alarm activation time received from the operation management apparatus 107 being equal to or less than a predetermined value. After the scheduled alarm activation time is received, control such as determining the acceleration start time and instructing decelerating can be performed by the above-described processing of the acceleration and deceleration control apparatus 101, and the control cannot be performed in a state where the scheduled alarm activation time is not received. Since there is a possibility that a required alarm duration cannot be ensured when the train reaches the level crossing without performing control, the acceleration and deceleration control apparatus 101 needs to instruct decelerating in this case. Specifically, the planning unit 104 calculates a deceleration β of the train 301 satisfying the following (Formula 4) relative to the remaining distance L to the approaching level crossing 302, and instructs the train control apparatus 108 to decelerate via the control information communication unit 106.

[Math. 4]

$$L < \frac{Vc^2}{2\beta} \cdots \quad (\text{Formula 4})$$

By implementing the acceleration and deceleration control apparatus 101 as described above, it is possible to reach the level crossing at a speed as high as possible at an appropriate timing according to the received scheduled alarm activation time while ensuring a predetermined alarm duration and maintaining safety. Therefore, it is possible to prevent an increase in a time required for the train 301 to pass through the level crossing 302, and it is possible to prevent an increase in the level crossing alarm duration, which is the time during which the alarm is started and the level crossing is closed.

The acceleration and deceleration control apparatus 101 may be provided either on the ground or on the train. When being provided on the ground, the control information communication unit 106 may wirelessly communicate with the train control apparatus 108.

(Operation Flowchart)

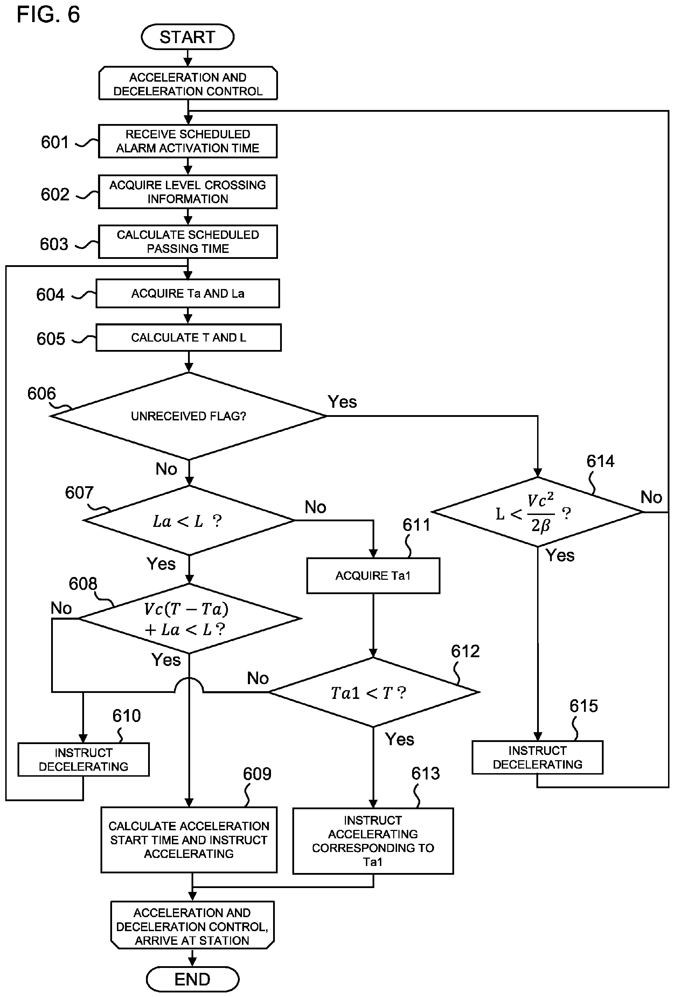

FIG. 6 is a flowchart showing processing of acceleration and deceleration control performed by the acceleration and deceleration control apparatus 101. The acceleration and deceleration control apparatus 101 periodically executes the flow shown in FIG. 6.

Step 601:

The operation information communication unit 105 receives the information on the scheduled alarm activation time from the operation management apparatus 107. The operation information communication unit 105 raises an unreceived flag indicating that the information on the scheduled alarm activation time is not received if the information is not received.

Step 602:

The planning unit 104 refers to the level crossing information table 202 in the storage unit 102 based on the current position of the train 301 via the information acquisition unit 103. The information acquisition unit 103 specifies the position of the level crossing 302 scheduled to be passed and acquires the level crossing information including the alarm duration required for the level crossing 302 and the allowable maximum speed Vm.

Step 603:

The planning unit 104 calculates the scheduled passing time for the level crossing scheduled to be passed based on the level crossing information and the scheduled alarm activation time. The planning unit 104 adds the alarm duration acquired in step 602 to the scheduled alarm activation time received in step 601 to calculate the scheduled passing time that is a scheduled time at which the level crossing is scheduled to be passed. When the information on the scheduled alarm activation time is not received, the planning unit 104 cannot calculate the scheduled passing time and keeps the scheduled passing time unknown.

Step 604:

The planning unit 104 refers to the acceleration control table 201 in the storage unit 102 based on the current speed Vc of the train 301 via the information acquisition unit 103. The planning unit 104 acquires the acceleration duration Ta and the acceleration distance La corresponding to the current speed Vc based on the acceleration control table 201.

Step 605:

The planning unit 104 calculates the remaining distance L that is a distance between the current position of the train 301 and the position of the level crossing 302 scheduled to be passed acquired in step 602. The planning unit 104 also calculates the remaining time T that is a difference between the current time and the scheduled passing time calculated in step 603. When the scheduled alarm activation time is not received, the planning unit 104 cannot calculate the remaining time and keeps the remaining time unknown.

Step 606:

The planning unit 104 refers to the unreceived flag of the operation information communication unit 105 and checks a reception state of the scheduled alarm activation time. When the unreceived flag is present and the scheduled alarm activation time is not received (Yes in step 606), the processing proceeds to step 614, and when the unreceived flag is not raised and the scheduled alarm activation time is received (No in step S606), the processing proceeds to step 607.

Step 607:

The planning unit 104 compares the remaining distance L with La in order to determine whether a distance required to accelerate to the maximum speed Vm remains available. When La is smaller than L (Yes in step 607), the processing proceeds to step 608. When La is greater than L (No in step 607), the processing proceeds to step 611.

(When Distance for Accelerating to Maximum Speed Vm is Available)

Step 608:

The planning unit 104 determines whether a predetermined condition is satisfied in order to determine whether it is required to decelerate. The predetermined condition is determined by (Formula 3), that is, Vc(T - Ta) + La < L. In other words, the predetermined condition may be that a sum of a distance traveled at the current speed Vc until the acceleration start time and a distance for accelerating from the current speed Vc to reach the level crossing passing speed is smaller than the remaining distance. When (Formula 3) is satisfied (Yes in step 608), it is possible to calculate the time Tc for traveling at the current speed Vc without decelerating, and the processing proceeds to step 609. When (Formula 3) is not satisfied (No in step 608), it is required to decelerate, and the processing proceeds to step 610.

Step 609:

The planning unit 104 calculates, using Formula 2, the constant-speed movement duration Tc that is the time during which the constant-speed movement is continued at the current speed Vc, and calculates a time obtained by adding the constant-speed movement duration Tc to the current time T0 as the acceleration start time. The planning unit 104 transmits the calculated acceleration start time to the train control apparatus 108 via an on-board communication unit 206 and instructs accelerating based on the acceleration start time, the acceleration duration Ta, and the acceleration distance La.

Step 610:

When the predetermined condition is not satisfied, that is, when it is determined that (Formula 3) is not satisfied, the planning unit 104 determines that the current speed Vc is high and instructs the train control apparatus 108 to decelerate the train via the control information communication unit 106. At this time, the predetermined deceleration can be used. Thereafter, the processing returns to step 604 again, and the acceleration and deceleration control operation is repeated.

(When Distance for Accelerating to Maximum Speed Vm is Unavailable)

Step 611:

Although the train cannot pass through the level crossing at the maximum speed Vm, it is desirable to pass through the level crossing while accelerating as much as possible. The planning unit 104 acquires the candidate acceleration duration Ta1 from the acceleration control table 201 in order to accelerate the train as much as possible. The remaining distance L is compared with La on the acceleration control table 201, and Ta at which La is equal to or greater than L is acquired as the candidate acceleration duration Ta1.

Step 612:

The planning unit 104 compares the candidate acceleration duration Ta1 acquired in step 611 with the remaining time T. When Ta1 is smaller than T (Yes in step 612), it is possible to accelerate, and thus the processing proceeds to step 613 to accelerate. When Ta1 is greater than T (No in step 612), since the remaining time is insufficient to perform the acceleration control of the acceleration control table 201 corresponding to the candidate acceleration duration Ta1, the processing proceeds to step 610 to perform deceleration control.

Step 613:

The planning unit 104 instructs the train control apparatus 108 to accelerate corresponding to Ta1 in the acceleration control table 201 via the control information communication unit 106.

Step 614:

When the scheduled alarm activation time is not received, the planning unit 104 outputs a control command for decelerating to stop the train before the level crossing. That is, since it is required to stop the train before the level crossing, the planning unit 104 determines whether (Formula 4) is satisfied with respect to the remaining distance L, the deceleration β, and the current speed Vc, and when (Formula 4) is satisfied (Yes in step 614), it is required to decelerate, and thus the processing proceeds to step 615. When (Formula 4) is not satisfied (No in step 614), since it is not required to perform any control, the processing returns to step 601 to check reception of the information on the scheduled alarm activation time.

Step 615:

The planning unit 104 instructs the train control apparatus 108 to decelerate at the deceleration β via the control information communication unit 106 and returns to step 601 in order to check the reception of the information on the scheduled alarm activation time.

The acceleration and deceleration control shown in FIG. 6 is periodically performed until the train arrives at a next station.

(Function and Effects)

According to the above processing, by determining the state in which it is required to decelerate, determining the state in which it is possible to accelerate, and calculating the acceleration start time according to a current state of the train, it is possible to reach the level crossing at a speed as high as possible while ensuring the required alarm duration and maintaining safety. Therefore, it is possible to prevent an increase in a time required for the train to pass through the level crossing and to prevent an increase in the level crossing alarm duration.

The planning unit 104 can select acceleration control matching the current speed from the acceleration control table 201 and instruct control of the train. Since movement selection can be performed without complicated computation, movement of the train can be controlled without imposing computational load.

In this way, according to the invention, it is possible to determine the acceleration start time and perform speed control such that the train can pass through the level crossing at the allowable maximum speed.

[Second Embodiment]

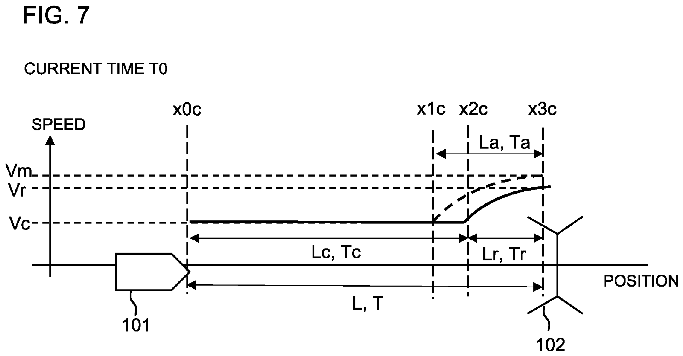

In a second embodiment, control with less energy consumption than that in the first embodiment will be described. In the first embodiment, deceleration is performed until (Formula 3) is satisfied, and since acceleration is performed after decelerating, energy consumption increases. Therefore, in the second embodiment, when (Formula 3) is not satisfied, the speed at which the level crossing is reached is set to a speed lower than the maximum speed Vm, and control for approaching the level crossing without decelerating is performed. In other words, the planning unit 104 reduces the level crossing passing speed when the sum of the distance traveled at the current speed Vc until the acceleration start time and the distance for accelerating from the current speed Vc to reach the level crossing passing speed exceeds the remaining distance L. This state is shown in FIG. 7. FIG. 7 is a diagram showing an example of a speed of a train accelerated using a train control system according to the second embodiment of the invention. In the embodiment, the configuration of the acceleration and deceleration control apparatus 101 is the same as that in the first embodiment, and the processing of the planning unit 104 is changed. Specifically, the processing of steps 608 and 609 in the first embodiment is changed as follows.

FIG. 7 shows a state in which the speed when reaching the level crossing is reduced from the maximum speed Vm to an arrival speed Vr in a state in which (Formula 3) is not satisfied, thus the remaining distance L is traveled in the remaining time T without decelerating and the level crossing is reached. A distance and a time required to accelerate from the current speed Vc to the arrival speed Vr are denoted by Lr and Tr, respectively.

When (Formula 3) is satisfied, the processing is the same as that in the first embodiment, and thus description of processing in that case is omitted.

In a case where (Formula 3) is not satisfied, it is required to decelerate when the train will travel at the current speed Vc for T seconds and exceed the level crossing. The planning unit 104 calculates the arrival speed Vr lower than the maximum speed Vm and a quasi-acceleration distance Lr that is an acceleration distance required to accelerate from the current speed Vc to the arrival speed Vr, based on the acceleration control table 201. Since the acceleration control table 201 is a table of the acceleration duration Ta and the acceleration distance La determined based on a difference between Vc and Vm, the time Tr and the distance Lr until accelerating from the current speed Vc to the arrival speed Vr can be calculated by adding a speed reduced from the maximum speed Vm to the arrival speed Vr to the current speed Vc and referring to the acceleration control table 201. Specifically, for example, when the current speed Vc is 5 and a speed obtained by reducing the maximum speed Vm by 5 is set as the arrival speed Vr, the acceleration duration Ta and acceleration distance La for a case where the current speed Vc is 10 obtained by adding 5 to the current speed Vc can be used as the quasi-acceleration duration Tr and the quasi-acceleration distance Lr, respectively. The same determination as in (Formula 4) is performed on the quasi-acceleration duration Tr and the quasi-acceleration distance Lr thus calculated. That is, it is determined whether the following formula is satisfied.
[Math. 5]

$$Vc(T - Tr) + Lr < L \cdots \quad (\text{Formula 5})$$

If (Formula 5) is satisfied, it is possible to accelerate to the arrival speed Vr and arrive at the level crossing, and thus the constant-speed movement duration Tc is calculated. The constant-speed movement duration Tc is a time for traveling at the speed Vc over a distance excluding Lr in the remaining distance L and thus can be calculated by the following formula.
[Math. 6]

$$Tc = \frac{L - Lr}{Vc} \cdots \quad (\text{Formula 6})$$

When (Formula 5) is not satisfied, the arrival speed Vr is further reduced to update the quasi-acceleration duration Tr and the quasi-acceleration distance Lr. That is, the arrival speed Vr is reduced until (Formula 5) is satisfied. A reduction margin of the arrival speed Vr may be determined in advance according to required accuracy of **Tc.**

(Function and Effects)

By changing the processing of the planning unit 104 as described above, it is possible to reduce deceleration and perform control with less energy consumption as compared to the first embodiment.

[Other Embodiments]

The disclosure also includes the following aspects.

(Aspect 1)

A train control system that controls a train traveling on a track having a level crossing, the train control system including:

an operation communication unit configured to receive information on a scheduled alarm activation time that is a scheduled time at which an alarm of the level crossing is to start; and
a planning unit configured to calculate, based on the scheduled alarm activation time, a scheduled passing time of the level crossing scheduled to be passed, in which
the planning unit

determines an acceleration start time that is a time at which the train starts to accelerate when a current speed and a current position of the train, a remaining time that is a difference between a current time and the scheduled passing time, and a remaining distance that is a distance between the current position and the level crossing scheduled to be passed satisfy a predetermined relationship, and
instructs the train to decelerate when the predetermined relationship is not satisfied.

(Aspect 2)

The train control system according to aspect 1, further including:

an information acquisition unit configured to specify the level crossing scheduled to be passed based on the current position of the train and to acquire level crossing information on the level crossing scheduled to be passed;
a storage unit configured to retain an acceleration control table containing an acceleration duration and an acceleration distance required to accelerate from the current speed of the train to a level crossing passing speed for passing through the level crossing scheduled to be passed; and
a train control apparatus configured to control an operation of the train, in which
the planning unit

calculates the scheduled passing time of the level crossing scheduled to be passed based on the level crossing information and the scheduled alarm activation time,
extracts the acceleration duration and the acceleration distance based on the acceleration control table, and
calculates the remaining time, which is the difference between the current time and the scheduled passing time, and the remaining distance, which is the distance between the current position and the level crossing scheduled to be passed,

when the acceleration distance is smaller than the remaining distance and a predetermined condition is satisfied, the planning unit

calculates a constant-speed movement duration that is a time during which constant-speed movement is continued at the current speed,
sets the acceleration start time by adding the constant-speed movement duration to the current time, and
instructs the train control apparatus to perform acceleration based on the acceleration start time, the acceleration duration, and the acceleration distance, and

when the acceleration distance is smaller than the remaining distance and the predetermined condition is not satisfied, the planning unit
instructs the train control apparatus to perform the deceleration.

(Aspect 3)

The train control system according to aspect 1 or 2, in which
the level crossing passing speed is a maximum speed allowed at the level crossing scheduled to be passed.

(Aspect 4)

The train control system according to any one of aspects 1 to 3, in which
the planning unit calculates the acceleration start time on condition that the train travels at the current speed until the acceleration start time, accelerates from the acceleration start time until reaching the level crossing passing speed, and enters the level crossing scheduled to be passed at the level crossing passing speed.

(Aspect 5)

The train control system according to any one of aspects 1 to 4, in which
the predetermined condition is that a sum of a distance traveled at the current speed until the acceleration start time and a distance for accelerating from the current speed to reach the level crossing passing speed is smaller than the remaining distance.

(Aspect 6)

The train control system according to any one of aspects 1 to 5, in which
the planning unit outputs a control command to decelerate for stopping the train before the level crossing when the scheduled alarm activation time is not received.

(Aspect 7)

The train control system according to any one of aspects 1 to 6, in which
the planning unit corrects the acceleration distance and the acceleration duration based on a maximum descending gradient before the level crossing scheduled to be passed.

(Aspect 8)

The train control system according to any one of aspects 1 to 7, in which

the planning unit reduces the level crossing passing speed when the sum of the distance traveled at the current speed until the acceleration start time and the distance for accelerating from the current speed to reach the level crossing passing speed exceeds the remaining distance.

Reference Signs List

|     |     |
| --- | --- |
| 100 | train control system |
| 101 | acceleration and deceleration control apparatus |
| 102 | storage unit |
| 103 | information acquisition unit |
| 104 | planning unit |
| 105 | operation information communication unit |
| 106 | control information communication unit |
| 107 | operation management apparatus |
| 108 | train control apparatus |
| 201 | acceleration control table |
| 202 | level crossing information table |
| 301 | train |
| 302 | level crossing |

**Claims**

1. A train control system that controls a train traveling on a track having a level crossing, the train control system comprising:

   an operation communication unit configured to receive information on a scheduled alarm activation time that is a scheduled time at which an alarm of the level crossing is to start; and
   a planning unit configured to calculate, based on the scheduled alarm activation time, a scheduled passing time of the level crossing scheduled to be passed, wherein
   the planning unit

   determines an acceleration start time that is a time at which the train starts to accelerate when a current speed and a current position of the train, a remaining time that is a difference between a current time and the scheduled passing time, and a remaining distance that is a distance between the current position and the level crossing scheduled to be passed satisfy a predetermined relationship, and
   instructs the train to decelerate when the predetermined relationship is not satisfied.

2. The train control system according to claim 1, further comprising:

   an information acquisition unit configured to specify the level crossing scheduled to be passed based on the current position of the train and to acquire level crossing information on the level crossing scheduled to be passed;
   a storage unit configured to retain an acceleration control table containing an acceleration duration and an acceleration distance required to accelerate from the current speed of the train to a level crossing passing speed for passing through the level crossing scheduled to be passed; and
   a train control apparatus configured to control an operation of the train, wherein
   the planning unit

   calculates the scheduled passing time of the level crossing scheduled to be passed based on the level crossing information and the scheduled alarm activation time,
   extracts the acceleration duration and the acceleration distance based on the acceleration control table, and
   calculates the remaining time, which is the difference between the current time and the scheduled passing time, and the remaining distance, which is the distance between the current position and the level crossing scheduled to be passed,

   when the acceleration distance is smaller than the remaining distance and a predetermined condition is satisfied, the planning unit

calculates a constant-speed movement duration that is a time during which constant-speed movement is continued at the current speed,

sets the acceleration start time by adding the constant-speed movement duration to the current time, and instructs the train control apparatus to perform acceleration based on the acceleration start time, the acceleration duration, and the acceleration distance, and

when the acceleration distance is smaller than the remaining distance and the predetermined condition is not satisfied, the planning unit

instructs the train control apparatus to perform the deceleration.

3. The train control system according to claim **2,** wherein
the level crossing passing speed is a maximum speed allowed at the level crossing scheduled to be passed.

4. The train control system according to claim 2, wherein
the planning unit calculates the acceleration start time on condition that the train travels at the current speed until the acceleration start time, accelerates from the acceleration start time until reaching the level crossing passing speed, and enters the level crossing scheduled to be passed at the level crossing passing speed.

5. The train control system according to claim 2, wherein
the predetermined condition is that a sum of a distance traveled at the current speed until the acceleration start time and a distance for accelerating from the current speed to reach the level crossing passing speed is smaller than the remaining distance.

6. The train control system according to any one of claims 1 to 5, wherein
the planning unit outputs a control command to decelerate for stopping the train before the level crossing when the scheduled alarm activation time is not received.

7. The train control system according to any one of claims 2 to 5, wherein
the planning unit corrects the acceleration distance and the acceleration duration based on a maximum descending gradient before the level crossing scheduled to be passed.

8. The train control system according to claim 4, wherein
the planning unit reduces the level crossing passing speed when a sum of a distance traveled at the current speed until the acceleration start time and a distance for accelerating from the current speed to reach the level crossing passing speed exceeds the remaining distance.

## FIG. 1

## FIG. 2

201

| SPEED Vc | ACCELERATION DURATION Ta | ACCELERATION DISTANCE La |
|---|---|---|
| 5 | 28 | 327 |
| 10 | 27 | 304 |
| 15 | 25 | 260 |
| ⋮ | ⋮ | ⋮ |

202

| | POSITION | ALARM DURATION | MAXIMUM SPEED Vm |
|---|---|---|---|
| LEVEL CROSSING A | (aa, bb) | XX | AA |
| LEVEL CROSSING B | (cc, dd) | YY | BB |
| LEVEL CROSSING C | (ee, ff) | ZZ | CC |
| ... | ... | ... | ... |

# FIG. 3

CURRENT TIME T0

# FIG. 4

CURRENT TIME T0

# FIG. 5

CURRENT TIME T0

## FIG. 6

START

ACCELERATION AND DECELERATION CONTROL

601 — RECEIVE SCHEDULED ALARM ACTIVATION TIME

602 — ACQUIRE LEVEL CROSSING INFORMATION

603 — CALCULATE SCHEDULED PASSING TIME

604 — ACQUIRE Ta AND La

605 — CALCULATE T AND L

606 UNRECEIVED FLAG? — Yes

No

607 $La < L$ ? — No

Yes

608 $Vc(T - Ta) + La < L$ ? — No / Yes

No

610 INSTRUCT DECELERATING

611 ACQUIRE Ta1

614 $L < \dfrac{Vc^2}{2\beta}$ ? — No

Yes

612 $Ta1 < T$ ? — No

Yes

609 CALCULATE ACCELERATION START TIME AND INSTRUCT ACCELERATING

613 INSTRUCT ACCELERATING CORRESPONDING TO Ta1

615 INSTRUCT DECELERATING

ACCELERATION AND DECELERATION CONTROL, ARRIVE AT STATION

END

## FIG. 7

CURRENT TIME T0

## INTERNATIONAL SEARCH REPORT

| International application No. |
|---|
| **PCT/JP2023/037511** |

| A. | CLASSIFICATION OF SUBJECT MATTER |
|---|---|

*B61L 23/14*(2006.01)i; *B60L 15/40*(2006.01)i; *B61L 29/28*(2006.01)i
FI:     B61L23/14 Z; B61L29/28 D; B60L15/40 D

According to International Patent Classification (IPC) or to both national classification and IPC

| B. | FIELDS SEARCHED |
|---|---|

Minimum documentation searched (classification system followed by classification symbols)

B61L23/14; B60L15/40; B61L29/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-196369 A (HITACHI, LIMITED) 10 December 2020 (2020-12-10) | 1 |
|  | paragraphs [0015]-[0024], [0035]-[0044], fig. 1-3, 7-9 | |
| Y | paragraphs [0025]-[0034], fig. 4-6 | 6 |
| A | | 2-5, 7-8 |
| Y | WO 2020/194696 A1 (MITSUBISHI ELECTRIC CORPORATION) 01 October 2020 (2020-10-01) | 6 |
|  | paragraph [0072], fig. 9, 10 | |
| A | JP 2020-36468 A (HITACHI, LIMITED) 05 March 2020 (2020-03-05) | 1-8 |
|  | claim 1, paragraphs [0003]-[0007], fig. 1-7 | |
| A | US 2016/0362123 A1 (WESTINGHOUSE AIR BRAKE TECHNOLOGIES CORPORATION) 15 December 2016 (2016-12-15) | 1-8 |
|  | paragraph [0130], fig. 1-9B | |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/037511**

| Patent document cited in search report | | | Publication date (day/month/year) | Patent family member(s) | | | Publication date (day/month/year) |
|---|---|---|---|---|---|---|---|
| JP | 2020-196369 | A | 10 December 2020 | (Family: none) | | | |
| WO | 2020/194696 | A1 | 01 October 2020 | (Family: none) | | | |
| JP | 2020-36468 | A | 05 March 2020 | WO | 2020/044757 | A1 | |
| US | 2016/0362123 | A1 | 15 December 2016 | CA | 2932752 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020196369 A
- JP 7045287 B